# EUROPEAN PATENT APPLICATION

(11) **EP 3 770 828 A1**
(43) Date of publication of application: **27.01.2021**
(21) Application number: 20185372.8
(22) Date of filing: 10.07.2020
(51) Int. Cl.: G06Q 10/00, G06Q 50/06

(54) **METHOD AND SYSTEM FOR PART SELECTION AND ORDER MANAGEMENT IN AN ENERGY DISTRIBUTION SYSTEM**

(30) Priority: 23.07.2019 US 201916520287
(71) Applicant: Honeywell International Inc., Morris Plains, NJ 07950 (US)
(72) Inventor: MUDIREDDY, Chandrasekar Reddy, Morris Plains, NJ 07950 (US); ARUNACHALAM, Soundari, Morris Plains, NJ 07950 (US); PALLE, Suresh Kumar, Morris Plains, NJ 07950 (US); JALGAMA, Ramesh, Morris Plains, NJ 07950 (US); DUFOUR, Pierre, Morris Plains, NJ 07950 (US)
(74) Representative: Dennemeyer & Associates S.A.

(57) **Abstract**

A method and system for part selection and order management in an energy distribution system can involve reading data from an electronic monitoring instrument of an energy distribution system, the data including information regarding a functionality of one or more parts of the electronic monitoring instrument, analyzing the data to determine if the one or more parts are functioning properly by establishing whether or not parts are within a configurable threshold condition, and automatically requesting one or more replacement, if the part or parts are found not to be within the threshold condition, so that the operational functionality of the energy distribution system can be enhanced by requesting the replacement part(s) prior to a failure of the one or more parts of the electronic monitoring instrument.

## Description

### TECHNICAL FIELD

Embodiments are generally related to energy distribution systems. Embodiments further relate to methods and systems for instrument part selection and order management in energy distribution systems.

### BACKGROUND

Energy distribution systems are usually monitored and controlled through the use of multiple instruments such as metering devices. The energy distribution industry has instruments such as metering devices distributed over hundreds of miles with and without remote accessibility. Such instruments include multiple replaceable parts.

Currently an efficient approach does not exist for determining individual part details and sourcing related information in a fast and efficient manner. For example, in conventional systems, the OEM (Original Equipment Manufacture) is usually approached to help find out and obtain the replacements ordered, which is a slow and time-consuming process. In addition, current approaches do not provide for an indication of component or part health, such as whether or not the instrument's components are malfunctioning, wear out, or aging, which means that a particular part or component of the instrument may need attention and replacement.

In most cases, part replacement occurs after the part has failed or is not in working condition, which results in a great deal of lead time for replacement to make the instrument operational. This can result in losses to energy distributors. The usual practice, however, is to maintain stocks that increase inventory costs.

### BRIEF SUMMARY

The following summary is provided to facilitate an understanding of some of the features of the disclosed embodiments and is not intended to be a full description. A full appreciation of the various aspects of the embodiments disclosed herein can be gained by taking the specification, claims, drawings, and abstract as a whole.

It is, therefore, one aspect of the disclosed embodiments to provide for a method and system for automatically ordering an instrument part.

It is another aspect of the disclosed embodiments to provide for the identification of a specific part number from among multiple possible configurations of instruments.

It is a further aspect of the disclosed embodiments to provide for the generation of instrument information without opening the instrument enclosure.

It is also an aspect of the disclosed embodiments to provide for the analysis of instrument parts and provide an indication as to whether or not the instrument is working correctly.

The aforementioned aspects and other objectives can now be achieved as described herein. In an embodiment, a method for part selection and order management in an energy distribution system, can involve reading data from an electronic monitoring instrument of an energy distribution system, the data including information regarding a functionality of at least one part of the electronic monitoring instrument; analyzing the data to determine if the at least one part is functioning properly by establishing whether or not the at least one part is within a configurable threshold condition; and automatically requesting at least one replacement part with respect to the at least one part, if the at least one part is found not to be within the threshold condition, so that the operational functionality of the energy distribution system is enhanced by requesting the at least one replacement part prior to a failure of the at least one part of the electronic monitoring instrument.

In an embodiment, the data can be read from the electronic monitoring instrument by a mobile device through bidirectional data communications between the mobile device and the electronic monitoring instrument.

In an embodiment, the automatically requesting at least one replacement part with respect to the at least one part, can further involve automatically preparing an electronic cart with an order for the at least one part.

In an embodiment, the automatically requesting at least one replacement part with respect to the at least one part, can further involve automatically placing an order for the at least one part.

In an embodiment, the automatically requesting at least one replacement part with respect to the at least one part, can further involve automatically preparing an electronic cart with an order for the at least one part, and automatically placing the order for the at least one part.

An embodiment can further involve automatically connecting the mobile device via bidirectional data communications to the electronic monitoring instrument prior to reading the data from the electronic monitoring instrument.

An embodiment can further involve allowing a user to manually select the at least one replacement part through a graphical user interface.

An embodiment can further involve selecting at least one replacement part based on at least one of: an electronic monitoring instrument category, an electronic monitoring instrument model, and a version of firmware associated with an electronic monitoring instrument.

An embodiment can further involve generating a part quote with respect to the at least one replacement cart for display of the part quote for a user through a graphical user interface.

In an embodiment, a system for part selection and order management in an energy distribution system, can include at least one processor and a memory. The memory can store instructions configured to cause the at least one processor to perform: reading data from an electronic monitoring instrument of an energy distribution system, the data including information regarding a functionality of at least one part of the electronic monitoring instrument; analyzing the data to determine if the at least one part is functioning properly by establishing whether or not the at least one part is within a configurable threshold condition; and automatically requesting at least one replacement part with respect to the at least one part, if the at least one part is found not to be within the threshold condition, so that the operational functionality of the energy distribution system is enhanced by requesting the at least one replacement part prior to a failure of the at least one part of the electronic monitoring instrument.

In an embodiment of the system, the data can be read from the electronic monitoring instrument by a mobile device through bidirectional data communications between the mobile device and the electronic monitoring instrument.

In an embodiment of the system, the instructions for automatically requesting at least one replacement part with respect to the at least one part, are further configured to perform: automatically preparing an electronic cart with an order for the at least one part.

In an embodiment of the system, the instructions for automatically requesting at least one replacement part with respect to the at least one part, are further configured to perform: automatically placing an order for the at least one part.

In an embodiment of the system, the instructions for automatically requesting at least one replacement part with respect to the at least one part, are further configured to perform: automatically preparing an electronic cart with an order for the at least one part; and automatically placing the order for the at least one part.

In an embodiment of the system, the instructions can be further configured to perform: automatically connecting the mobile device via bidirectional data communications to the electronic monitoring instrument prior to reading the data from the electronic monitoring instrument.

In an embodiment of the system, the instructions can be further configured to perform: allowing a user to manually select the at least one replacement part through a graphical user interface.

In an embodiment of the system, the instructions can be further configured to perform: selecting at least one replacement part based on at least one of: an electronic monitoring instrument category, an electronic monitoring instrument model, and a version of firmware associated with an electronic monitoring instrument.

In an embodiment of the system, the instructions can be further configured to generate a part quote with respect to the at least one replacement cart for display of the part quote for a user through a graphical user interface.

In an embodiment, a system for part selection and order management in an energy distribution system, can include: an energy distribution system comprising an electronic monitoring instrument, wherein data is read from the electronic monitoring instrument, the data comprising information regarding a functionality of at least one part of the electronic monitoring instrument; and a mobile application that analyzes the data to determine if the at least one part is functioning properly by establishing whether or not the at least one part is within a configurable threshold condition, and wherein the mobile application automatically requests at least one replacement part with respect to the at least one part, if the at least one part is found not to be within the threshold condition, so that the operational functionality of the energy distribution system is enhanced by requesting the at least one replacement part prior to a failure of the at least one part of the electronic monitoring instrument.

In an embodiment of the system, the data can be read from the electronic monitoring instrument by a mobile device through bidirectional data communications between the mobile device and the electronic monitoring instrument, wherein the mobile device stores the mobile application in a memory of the mobile device and facilitates processing of the mobile application by a processor.

### BRIEF DESCRIPTION OF THE DRAWINGS

The accompanying figures, in which like reference numerals refer to identical or functionally-similar elements throughout the separate views and which are incorporated in and form a part of the specification, further illustrate the present invention and, together with the detailed description of the invention, serve to explain the principles of the present invention.
FIG. 1 illustrates a block diagram depicting an example embodiment of a mobile device, in accordance with an embodiment;
FIG. 2 illustrates a block diagram depicting a framework for part selection and order management in an energy distribution system, in accordance with an embodiment;
FIG. 3 illustrate a flow chart of operations depicting logical operation steps of a method for part selection and order management in an energy distribution system, in accordance with an embodiment;
FIG. 4 illustrates a flow diagram depicting logical operational steps of a method for automatic part selection and order management in an energy distribution system, in accordance with an embodiment;
FIG. 5 illustrates a flow diagram depicting logical operational steps of a method for manual part selection and order management in an energy distribution system, in accordance with an embodiment;
FIG. 6 illustrates a schematic view of a computer system, in accordance with an embodiment; and
FIG. 7 illustrates a schematic view of a software system including a module, an operating system, and a user interface, in accordance with an embodiment.

### DETAILED DESCRIPTION

The particular values and configurations discussed in these non-limiting examples can be varied and are cited merely to illustrate one or more embodiments and are not intended to limit the scope thereof.

Subject matter will now be described more fully hereinafter with reference to the accompanying drawings, which form a part hereof, and which show, by way of illustration, specific example embodiments. Subject matter may, however, be embodied in a variety of different forms and, therefore, covered or claimed subject matter is intended to be construed as not being limited to any example embodiments set forth herein; example embodiments are provided merely to be illustrative. Likewise, a reasonably broad scope for claimed or covered subject matter is intended. Among other issues, subject matter may be embodied as methods, devices, components, or systems. Accordingly, embodiments may, for example, take the form of hardware, software, firmware, or a combination thereof. The following detailed description is, therefore, not intended to be interpreted in a limiting sense.

Throughout the specification and claims, terms may have nuanced meanings suggested or implied in context beyond an explicitly stated meaning. Likewise, phrases such as "in one embodiment" or "in an example embodiment" and variations thereof as utilized herein may not necessarily refer to the same embodiment and the phrase "in another embodiment" or "in another example embodiment" and variations thereof as utilized herein may or may not necessarily refer to a different embodiment. It is intended, for example, that claimed subject matter include combinations of example embodiments in whole or in part.

In general, terminology may be understood, at least in part, from usage in context. For example, terms such as "and," "or," or "and/or" as used herein may include a variety of meanings that may depend, at least in part, upon the context in which such terms are used. Generally, "or" if used to associate a list, such as A, B, or C, is intended to mean A, B, and C, here used in the inclusive sense, as well as A, B, or C, here used in the exclusive sense. In addition, the term "one or more" as used herein, depending at least in part upon context, may be used to describe any feature, structure, or characteristic in a singular sense or may be used to describe combinations of features, structures, or characteristics in a plural sense. Similarly, terms such as "a," "an," or "the", again, may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context.

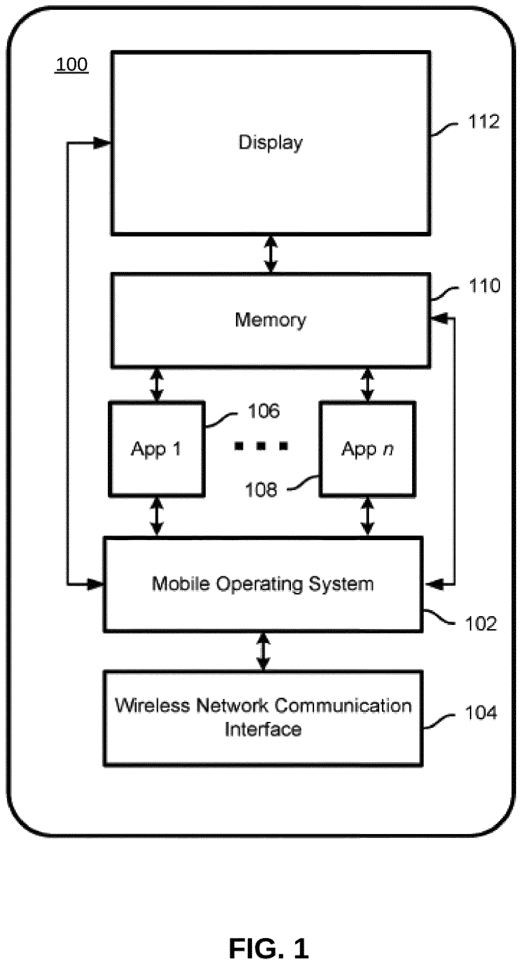

FIG. 1 illustrates a block diagram depicting an example embodiment of a mobile device, in accordance with an embodiment. In the example shown in FIG. 1, the mobile device 100 (e.g., a wireless device, a mobile phone, tablet, or other mobile device) can include a mobile operating system 102 running on a processor (not shown). An example of the mobile device 100 is a Smartphone such as the iPhone, which is a Smartphone made by Apple Inc. of Cupertino, California, that combines a computer, iPod, digital camera and cellular phone into one device with a touchscreen interface. Another example of mobile device 100 is the UE (User Equipment) shown in U.S. Patent No. 10,313, 941, which issued on June 4, 2019 to Apple Inc. U.S. Patent No. 10,313, 941 is incorporated herein by reference in its entirety.

Another example of mobile device 100 is a tablet computer or tablet computing device or a "tablet", which is a mobile device with a mobile operating system and a touchscreen display, processing circuitry and a rechargeable battery configured in a single, thin flat package. Other examples of the mobile device 100 include laptop computers.

Mobile network connectivity can be provided for the mobile device 100 via a wireless network communication interface 104, which can be configured to transmit and receive information via a wireless radiotelephone subsystem that includes an antenna, transceiver, and associated components to provide wireless communication connectivity via a mobile network to other mobile devices and to networked computers, such as computer servers, via the Internet and/or other networks.

A set of mobile applications (sometimes "mobile app" or "app"), represented in FIG. 1 by mobile apps 106 and 108, can be stored on the mobile device 100 on a storage drive or other persistent storage device (not shown) and each can be configured to run on top of the mobile operating system 102, including by invoking services of mobile operating system 102 to communicate via wireless network communication interface 104 with remote resources, such as application servers running applications and/or services with which the mobile app (also referred to as an "app") can be associated. Mobile operating system 102 and mobile apps represented by app 106 and app 108 have access to and use a memory 110 to store and retrieve data. For example, mobile operating system 102 may allocate to each app a region of memory to be used by that app to store app-related data.

Similarly, each app may be allocated a set of logical locations in a persistent storage managed by mobile operating system 102, e.g., an app-specific directory in a file system used by mobile operating system 102 to manage persistently stored objects. The mobile operating system 102 can be connected to and manage app interactions with a display subsystem 112. Display subsystem 112 (sometimes "display") includes a touch-sensitive display device, for example, a capacitive or other display able to generate and provide to mobile operation system 102 signals representative of single and/or multi-touch gestures, such as swiping (and the direction thereof), pinching in or out, dragging, and dropping.

A mobile app such as app 106 or app 108 may be configured to display app display pages, e.g., app user interface pages, content display pages, etc., via display 112. A mobile app also may be configured to receive user input provided via display 112, e.g., selection, dragging, dropping, and/or other user input associated with physical interactions with the touch-sensitive surface of display 112.

A mobile app, such as app 106 or app 108 of FIG. 1, can provide access to app functionality via a mobile app user interface displayed via a display device of the mobile device. Information and/or user interactive controls may be displayed. Users may access further functionality and/or control the manner in which functionality is provided and/or the content displayed by performing touches and/or gestures (e.g., select an object, activate a button or other control, drag an object to a new location, drag an object to a location associated with a control input--such as dragging a file icon to a folder to add the file to the folder, etc.)

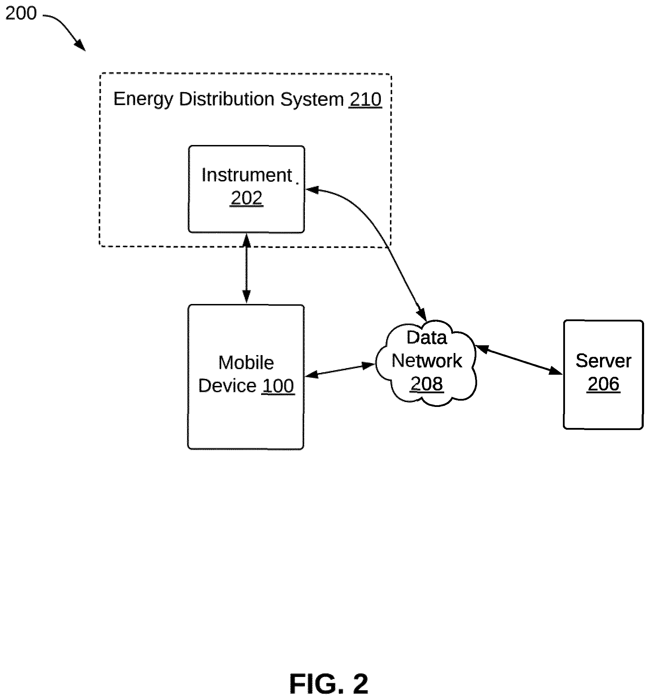

FIG. 2 illustrates a block diagram depicting a framework 200 for part selection and order management in an energy distribution system 210, in accordance with an embodiment. As shown in FIG. 2, the framework 200 can include one or more mobile devices, such as the mobile device 100, which can be configured to communicate wirelessly and bidirectionally with a server 206 through a data network 208. The server 206 can also communicate wirelessly and bidirectionally with the data network 208, which can be used to facilitate communications and the exchange of data and instructions between the mobile device 100 and the server 206.

The data network 208 may be a wireless network such as a packet based wireless data network. Such a wireless network may be employ stand-alone ad-hoc networks, mesh networks, wireless LAN (WLAN) networks, cellular networks, or the like. The data network 208 can further include a system of terminals, gateways, routers, or the like coupled by wireless radio links, or the like, which may move freely, randomly, or organize themselves arbitrarily, such that network topology may change, at times even rapidly. The data network 108 network may further employ a plurality of network access technologies including Long Term Evolution (LTE), WLAN, Wireless Router (WR) mesh, or 2nd, 3rd, 4^{th}, 5th generation (2G, 3G, 4G 5G) cellular technology, or the like. Network access technologies may enable wide area coverage for devices, such as client devices with varying degrees of mobility, for example.

The data network 208 may enable RF or wireless type communication via one or more network access technologies, such as Global System for Mobile communication (GSM), Universal Mobile Telecommunications System (UMTS), General Packet Radio Services (GPRS), Enhanced Data GSM Environment (EDGE), 3GPP Long Term Evolution (LTE), LTE Advanced, Wideband Code Division Multiple Access (WCDMA), Bluetooth, 802.11 b/g/n, or the like. The data network 208 may include virtually any type of wireless communication mechanism by which signals may be communicated between devices, such as a client device or a computing device, between or within a network, or the like.

In data network 208, signal packets may be communicated via the data network 208 in the context of a network of participating digital communication networks may be compatible with or compliant with one or more protocols. The signaling formats or protocols employed may include, for example, TCP/IP, UDP, DECnet, NetBEUI, IPX, AppleTalk, or the like. Versions of the Internet Protocol (IP) may include IPv4 or IPv6.

The data network 208 may be the Internet or may be linked to or incorporate the Internet. The Internet refers to a decentralized global network of networks. The Internet can include local area networks (LANs), wide area networks (WANs), wireless networks, or long haul public networks that, for example, allow signal packets to be communicated between LANs. Signal packets may be communicated between nodes of a network, such as, for example, to one or more sites employing a local network address. A signal packet may, for example, be communicated over the Internet from a user site via an access node coupled to the Internet. Likewise, a signal packet may be forwarded via network nodes to a target site coupled to the network via a network access node, for example. A signal packet communicated via the internet may, for example, be routed via a path of gateways, servers, etc., that may route the signal packet in accordance with a target address and availability of a network path to the target address.

The data network 208 can facilitate wireless communication. The phrase "wireless communication" and the like, can relate to radio frequency or other electromagnetic communication. In some embodiments, wireless communication can include a wireless communication standard such as IEEE 802.11 a, 11 b, 11g, or 11n. However, in the context of the invention, there is no particular requirement that wireless communication or a communication network must necessarily (1) use radio spectrum, (2) use electromagnetic communication, or even (3) be entirely confined to untethered communication coupling.

The phrases "mobile device", "wireless station", "mobile station" and the like, generally refer to devices capable of wireless communication. In some embodiments, mobile devices or wireless devices can implement a wireless communication standard such as IEEE 802.11a, 11b, 11g, or 11n. However, in the context of the invention, there is no particular requirement (1) that this particular communication standard is used, e.g., the wireless communication might be conducted according to a standard other than 802.11, or even according to a an IEEE standard entirely, or (2) that all wireless devices each use the same standard or even use inter-compatible communication standards.

The mobile device 100 can further communicate via bidirectional wireless communications with an instrument 202 of an energy distribution system 210. The instrument 202 may be, for example, a field device as a part of a group of field devices in an industrial setting such as a manufacturing plant, a hydrocarbon processing facility, and so on. Examples of instrument 202 include a sensor, a metering device, a controller, etc. Such instruments may be distributed in a single facility or a group of facilities or over, for example, hundreds of miles with or without remote accessibility.

The mobile device 100 can communicate with instrument 202 via bidirectional wireless communications such as, for example, the data network 208 or via, for example, short-wavelength wireless communications, such as Bluetooth®. Note that as utilized herein, *Bluetooth* relates to a wireless communications standard for exchanging data between fixed and mobile devices over short distances using short-wavelength UHF radio waves. Thus, the mobile device 100 can communicate wirelessly directly with the instrument 202 via such short-wavelength wireless communications, or via the data network 208 (assuming that the instrument 202 is also configured to communicate wirelessly through the data network 208).

An app such as app 106 or app 108 can be configured, for example, to automate an entire order management process including the capture of part specific diagnostic information from one or more instruments such as instrument 202. Such apps may also be configured to identify instrument parts by part number for replacement. In addition, the app (or apps) may be configured to check an inventory system for the availability of the part (or parts), and generate a quote or estimate for the replacement part (i.e., how much the replacement part costs). The app may also be integrated with an order management system and can be integrated with a payment gateway.

The aforementioned app can be configured to automate a supply ordering system for electronically ordering a replaceable part in the instrument 202 (e.g., a metering device). The disclosed app can also provide for the electronic identification of a condition of a replaceable component or part and can automatically electronically send an offer to purchase a replacement part upon identification of a configurable threshold condition. The app can also provide for manual options for selecting parts for a selected device and placing the order. The server 206 can be configured to take the order from the app, and make requests to a supplier for the part, and can further track the order. The app can further analyze the component parts in the instrument 202 and provides a health indicator (e.g. indicating that the instrument 202 is close to failing or that particular parts in the instrument 202 are close to failing).

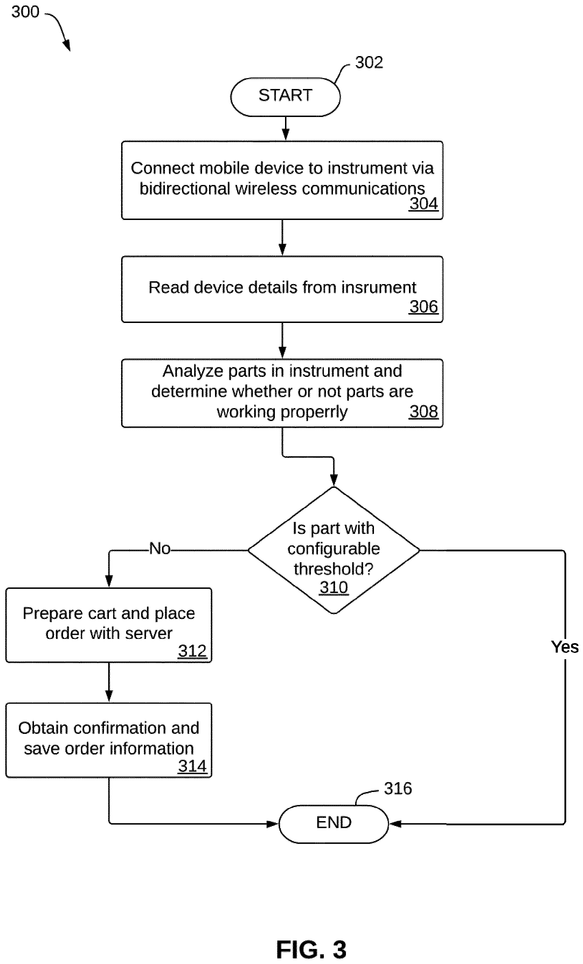

FIG. 3 illustrate a flow chart of operations depicting logical operation steps of a method 300 for part selection and order management in the energy distribution system 210 shown in FIG. 2, in accordance with an embodiment. As indicated at block 302, the process begins. Next, as shown at block 304, an operation can be implemented in which the mobile device 100 is connected to and communicates with the instrument 202 via wireless via bidirectional wireless communications (e.g., a packet based wireless communications network such as a WLAN, IEEE enabled wireless network, direct Bluetooth communications, etc) as discussed previously. As an example of the operation depicted at block 304, a technician may connect the aforementioned app (or apps) to the instrument 202 using Bluetooth communications or TCP/IP.

Thereafter, as illustrated at block 306, an operation can be implemented in which device details are read from the instrument 202. For example, the aforementioned app (or apps) can be configured to read the device details from instrument 202. Next, as shown at block 308, an operation can be implemented to automatically analyze one or more parts or components in the instrument 202 and determine whether or not such parts or components are functioning properly. For example, the aforementioned app can check whether or not the parts or components are working correction and provide indications of factors such as, remaining batter voltage, transducer functionality, probe health indicators, and so on.

Thereafter, as illustrated at decision block 310, a step or operation can be implemented to determine whether or not the analyzed parts or components are within a configurable threshold or threshold condition. Note that as utilized herein the terms *configurable threshold* and *threshold condition* can be utilized interchangeably to refer to the same feature. If the part is within the configurable threshold or threshold condition, the process can then terminate, as shown at block 316. In other words, if a part or component is found to be within the configurable threshold or threshold condition, there is no need to replace the part or component.

If, however, the part or component is found to be within the configurable threshold or threshold condition, then an operation can be implemented, as shown at block 312 to prepare an electronic cart ("cart") and place an order for the part or component that needs replacing to the server 206. As an example of the operation depicted at block 312, the aforementioned app can prepare the cart and place the order to the server 206. Note that the term *cart* as utilized herein can relate to a shopping cart, which in online payment feature can be implemented by a piece of e-commerce software on a server such as the server 206, which can be configured to allow visitors to an Internet site to select items for eventual purchase, analogous to the term "shopping cart." Thus, the aforementioned cart can be implemented as a piece of software that facilitates the purchase of a product or service, and which can automatically accept a payment and organize a distribution of this information to a merchant, a supplier, a payment processor and/or and other parties.

Following processing of the operation depicted at block 312, an operation can be implemented as depicted at block 314 to obtain the order information associated with the order for the part or component and save this information into a memory of, for example, the server 206 and/or the memory 110 of the mobile device 100. As an example of the operation shown at block 314, the aforementioned app can be provided with a confirmation of the order from the server 206 and the order information can be saved into memory 110 of the mobile device 100. The process can then terminate as shown at block 316.

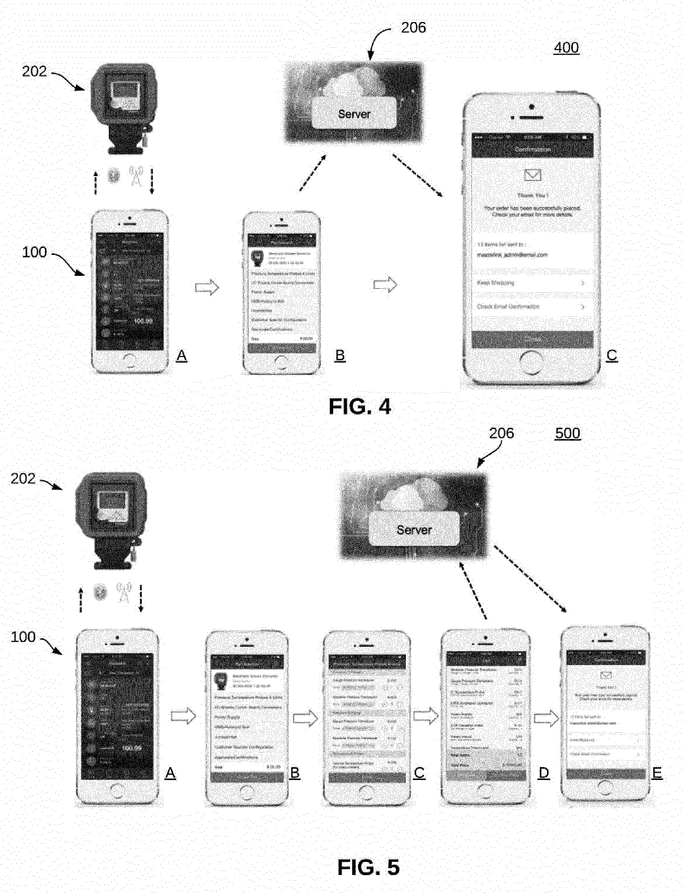

FIG. 4 illustrates a flow diagram depicting logical operational steps of a method 400 for automatic part selection and order management in an energy distribution system, in accordance with an embodiment. Note that in the figures disclosed herein, identical parts or elements are indicated by identical reference numerals. Thus, as shown at Step A in FIG. 4, the mobile app (or simply "app") associated with the mobile device 100 can connect instrument 202, which depicted in the FIG. 4 embodiment as a metering device. The app can connect to instrument 202 and read data from the instrument 202, analyzes whether all physical parts or elements are working correctly. As shown at Step B, the app places the order with respect to server 208. Then, as shown at Step C, the app confirms the order. Thus, the mobile app can provide clear information regarding the status of metering device parts without opening the metering enclosure and also analyzes the metering device parts and indicates whether the metering device is functioning properly.

FIG. 5 illustrates a flow diagram depicting logical operational steps of a method 500 for manual part selection and order management in an energy distribution system, in accordance with an embodiment. As shown at Step A in FIG. 5, the app connects to instrument 202 and reads data from the instrument 202. As depicted next at Step B, a user can select parts manually from the app. Then, as shown at Step C, a user can select a quantity of parts. Next, as depicted at Step D, the app can be used to place the order. Then, as indicated at Step E, the order is confirmed.

In FIGS. 4-5, the server 206 is shown as a cloud server. Such a cloud server can be implemented as a hosted, and typically virtual, computer server that is accessible by users over a network. Such a cloud servers can provide the same functions, support the same operating system (OS) and applications or apps, and offer performance characteristics similar to traditional physical servers that run in a local data center. Such a cloud server may also be referred to as a virtual server, a virtual private server or a virtual platform.

The disclosed example embodiments are described at least in part herein with reference to flowchart illustrations and/or block diagrams of methods, systems, and computer program products and data structures according to embodiments of the invention. It will be understood that each block of the illustrations, and combinations of blocks, can be implemented by computer program instructions. These computer program instructions may be provided to a processor of, for example, a general-purpose computer, special-purpose computer, or other programmable data processing apparatus to produce a machine, such that the instructions, which execute via the processor of the computer or other programmable data processing apparatus, create means for implementing the functions/acts specified in the block or blocks.

To be clear, the disclosed embodiments can be implemented in the context of, for example a special-purpose computer or a general-purpose computer, or other programmable data processing apparatus or system. For example, in some example embodiments, a data processing apparatus or system can be implemented as a combination of a special-purpose computer and a general-purpose computer. In this regard, a system composed of different hardware and software modules and different types of GUI features may be considered a special-purpose computer designed with the specific purpose of rendering a visualization. In general, embodiments may be implemented as a method, and/or a computer program product at any possible technical detail level of integration. The computer program product may include a computer readable storage medium (or media) having computer readable program instructions thereon for causing a processor to carry out aspects of the embodiments.

The aforementioned computer program instructions may also be stored in a computer-readable memory that can direct a computer or other programmable data processing apparatus to function in a particular manner, such that the instructions (e.g., steps/operations) stored in the computer-readable memory produce an article of manufacture including instruction means which implement the function/act specified in the various block or blocks, flowcharts, and other architecture illustrated and described herein.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the block or blocks.

The flow charts and block diagrams in the figures illustrate the architecture, functionality, and operation of possible implementations of systems, methods, and computer program products according to various embodiments (e.g., preferred or alternative embodiments). In this regard, each block in the flow chart or block diagrams may represent a module, segment, or portion of instructions, which comprises one or more executable instructions for implementing the specified logical function(s).

In some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The functionalities described herein may be implemented entirely and non-abstractly as physical hardware, entirely as physical non-abstract software (including firmware, resident software, micro-code, etc.) or combining non-abstract software and hardware implementations that may all generally be referred to herein as a "circuit," "module," "engine", "component," "block", "database", "agent" or "system." Furthermore, aspects of the present disclosure may take the form of a computer program product embodied in one or more non-ephemeral computer readable media having computer readable and/or executable program code embodied thereon.

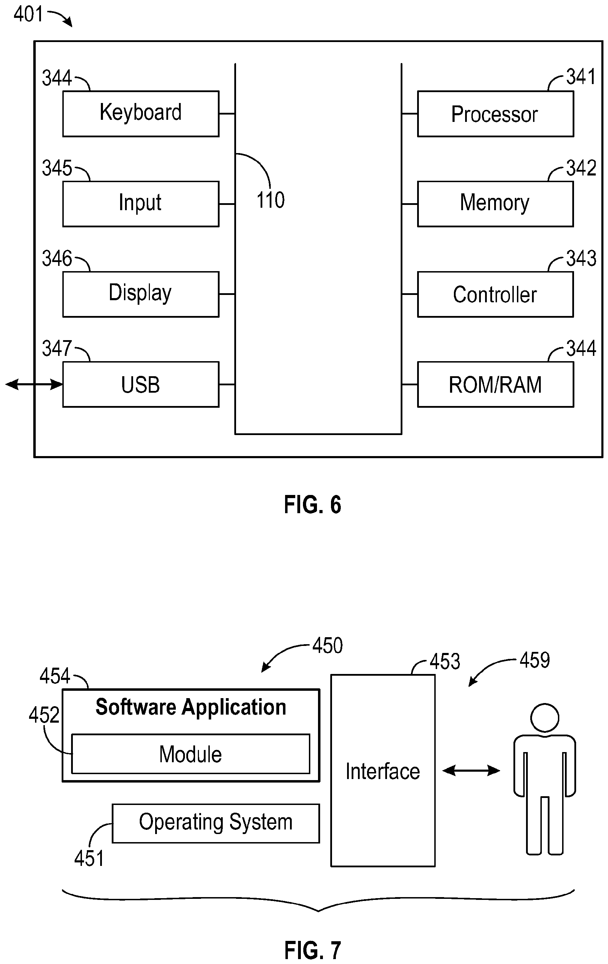

FIGS. 6-7 are shown only as exemplary diagrams of data-processing environments in which example embodiments may be implemented. It should be appreciated that FIGS. 6-7 are only exemplary and are not intended to assert or imply any limitation with regard to the environments in which aspects or embodiments of the disclosed embodiments may be implemented. Many modifications to the depicted environments may be made without departing from the spirit and scope of the disclosed embodiments.

As illustrated in FIG. 6, some embodiments may be implemented in the context of a data-processing system 401 that can include, for example, one or more processors such as a processor 341 (e.g., a CPU (Central Processing Unit) and/or other microprocessors), a memory 342, a controller 343, additional memory such as ROM/RAM 332 (i.e. ROM and/or RAM), a peripheral USB (Universal Serial Bus) connection 347, a keyboard 344 and/or another input device 345 (e.g., a pointing device, such as a mouse, track ball, pen device, etc.), a display 346 (e.g., a monitor, touch screen display, etc) and/or other peripheral connections and components.

The system bus 110 serves as the main electronic information highway interconnecting the other illustrated components of the hardware of data-processing system 401. In some embodiments, the processor 341 may be a CPU that functions as the central processing unit of the data-processing system 401, performing calculations and logic operations required to execute a program. Read only memory (ROM) and random access memory (RAM) of the ROM/RAM 344 constitute examples of non-transitory computer-readable storage media.

The controller 343 can interface with one or more optional non-transitory computer-readable storage media to the system bus 110. These storage media may include, for example, an external or internal DVD drive, a CD ROM drive, a hard drive, flash memory, a USB drive or the like. These various drives and controllers can be optional devices. Program instructions, software or interactive modules for providing an interface and performing any querying or analysis associated with one or more data sets may be stored in, for example, ROM and/or RAM 344. Optionally, the program instructions may be stored on a tangible, non-transitory computer-readable medium such as a compact disk, a digital disk, flash memory, a memory card, a USB drive, an optical disc storage medium and/or other recording medium

As illustrated, the various components of data-processing system 401 can communicate electronically through a system bus 351 or similar architecture. The system bus 351 may be, for example, a subsystem that transfers data between, for example, computer components within data-processing system 401 or to and from other data-processing devices, components, computers, etc. The data-processing system 401 may be implemented in some embodiments as, for example, a server in a client-server based network (e.g., the Internet) or in the context of a client and a server (i.e., where aspects are practiced on the client and the server).

In some example embodiments, data-processing system 401 may be, for example, a standalone desktop computer, a laptop computer, a Smartphone, a tablet computing device and so on, wherein each such device is operably connected to and/or in communication with a client-server based network or other types of networks (e.g., cellular networks, Wi-Fi, etc). Thus, in some embodiments, the data-processing system 401 can be implemented as a mobile device such as the mobile device 100 discussed previously

FIG. 7 illustrates a computer software system 450 for directing the operation of the data-processing system 401 depicted in FIG. 6. The software application 454, stored for example in memory 342 and/or another memory, generally includes one or more modules such as module 452. The computer software system 450 also includes a kernel or operating system 451 and a shell or interface 453. One or more application programs, such as software application 454, may be "loaded" (i.e., transferred from, for example, mass storage or another memory location into the memory 342) for execution by the data-processing system 401. The data-processing system 401 can receive user commands and data through the interface 453; these inputs may then be acted upon by the data-processing system 401 in accordance with instructions from operating system 451 and/or software application 454. The interface 453 in some embodiments can serve to display results, whereupon a user 459 may supply additional inputs or terminate a session. The software application 454 can include module(s) 452, which can, for example, implement the steps, instructions or operations such as those discussed herein.

The following discussion is intended to provide a brief, general description of suitable computing environments in which the system and method may be implemented. Although not required, the disclosed embodiments will be described in the general context of computer-executable instructions, such as program modules, being executed by a single computer. In most instances, a "module" (also referred to as an "engine") may constitute a software application, but can also be implemented as both software and hardware (i.e., a combination of software and hardware).

Generally, program modules include, but are not limited to, routines, subroutines, software applications, programs, objects, components, data structures, etc., that perform particular tasks or implement particular data types and instructions. Moreover, those skilled in the art will appreciate that the disclosed method and system may be practiced with other computer system configurations, such as, for example, handheld devices, multi-processor systems, data networks, microprocessor-based or programmable consumer electronics, networked PCs, minicomputers, mainframe computers, servers, and the like.

Note that the term *module* (or an *engine*) as utilized herein may refer to a collection of routines and data structures that perform a particular task or implements a particular data type. Modules may be composed of two parts: an interface, which lists the constants, data types, variable, and routines that can be accessed by other modules or routines, and an implementation, which is typically private (accessible only to that module) and which includes source code that actually implements the routines in the module. The term module may also simply refer to an application, such as a computer program designed to assist in the performance of a specific task, such as word processing, accounting, inventory management, etc.

In some example embodiments, the term "module" can also refer to a modular hardware component or a component that is a combination of hardware and software. It should be appreciated that implementation and processing of such modules according to the approach described herein can lead to improvements in processing speed and ultimately in energy savings and efficiencies in technological systems, such as, for example, the data-processing system 401 shown in FIG. 6. A "module" can perform the various steps, operations or instructions discussed herein. For example, a module may perform the instructions described herein with respect to the blocks in FIG. 3 and the steps in FIG. 4 and FIG. 5. A mobile app as discussed herein, can also include one or more modules.

FIGS. 6-7 are intended as examples and not as architectural limitations of disclosed embodiments. Additionally, such embodiments are not limited to any particular application or computing or data processing environment. Instead, those skilled in the art will appreciate that the disclosed approach may be advantageously applied to a variety of systems and application software. Moreover, the disclosed embodiments can be embodied on a variety of different computing platforms, including Macintosh, UNIX, LINUX, and the like.

It is understood that the specific order or hierarchy of steps, operations, or instructions in the processes or methods disclosed is an illustration of exemplary approaches. For example, the various steps, operations or instructions discussed herein can be performed in a different order. Similarly, the various steps and operations of the disclosed example pseudo-code discussed herein can be varied and processed in a different order. Based upon design preferences, it is understood that the specific order or hierarchy of such steps, operation or instructions in the processes or methods discussed and illustrated herein may be rearranged. The accompanying claims, for example, present elements of the various steps, operations or instructions in a sample order, and are not meant to be limited to the specific order or hierarchy presented.

The inventors have realized a non-abstract technical solution to the technical problem to improve a computer-technology by improving efficiencies in such computer technology. The disclosed embodiments offer technical improvements to a computer-technology such as a data-processing system, an energy distribution system that utilizes data-processing systems, and can further provide a non-abstract improvement to a technology via a technical solution to the technical problem(s) identified in the background section of this disclosure.

The disclosed approach represents a concrete and non-abstract improvement over conventional systems. The disclosed approach improves the user experience in part selection and order management in an energy distribution system. In addition, automatic part selection and order of parts for instruments in an energy distribution system improves the efficiency and functionality of the energy distribution system by replacing parts prior to failure of such parts.

It will be appreciated that variations of the above-disclosed and other features and functions, or alternatives thereof, may be desirably combined into many other different systems or applications. It will also be appreciated that various presently unforeseen or unanticipated alternatives, modifications, variations or improvements therein may be subsequently made by those skilled in the art which are also intended to be encompassed by the following claims.

## Claims

1. A method for part selection and order management in an energy distribution system, comprising:
reading data from an electronic monitoring instrument of an energy distribution system, the data including information regarding a functionality of at least one part of the electronic monitoring instrument;
analyzing the data to determine if the at least one part is functioning properly by establishing whether or not the at least one part is within a configurable threshold condition; and
automatically requesting at least one replacement part with respect to the at least one part, if the at least one part is found not to be within the threshold condition, wherein the operational functionality of the energy distribution system is enhanced by requesting the at least one replacement part prior to a failure of the at least one part of the electronic monitoring instrument.

2. The method of claim 1 wherein the data is read from the electronic monitoring instrument by a mobile device through bidirectional data communications between the mobile device and the electronic monitoring instrument.

3. The method of claim 1 wherein the automatically requesting at least one replacement part with respect to the at least one part, further comprises automatically placing an order for the at least one part.

4. The method of claim 2 further comprising automatically connecting the mobile device via bidirectional data communications to the electronic monitoring instrument prior to reading the data from the electronic monitoring instrument.

5. The method of claim 1 further comprising selecting at least one replacement part based on at least one of: an electronic monitoring instrument category, an electronic monitoring instrument model, and a version of firmware associated with an electronic monitoring instrument.

6. A system for part selection and order management in an energy distribution system, comprising:
at least one processor and a memory, the memory storing instructions configured to cause the at least one processor to perform:
reading data from an electronic monitoring instrument of an energy distribution system, the data including information regarding a functionality of at least one part of the electronic monitoring instrument;
analyzing the data to determine if the at least one part is functioning properly by establishing whether or not the at least one part is within a configurable threshold condition; and
automatically requesting at least one replacement part with respect to the at least one part, if the at least one part is found not to be within the threshold condition, wherein the operational functionality of the energy distribution system is enhanced by requesting the at least one replacement part prior to a failure of the at least one part of the electronic monitoring instrument.

7. The system of claim 6 wherein the data is read from the electronic monitoring instrument by a mobile device through bidirectional data communications between the mobile device and the electronic monitoring instrument.

8. The system of claim 6 wherein the instructions are further configured to perform:
automatically connecting the mobile device via bidirectional data communications to the electronic monitoring instrument prior to reading the data from the electronic monitoring instrument.

9. A system for part selection and order management in an energy distribution system, comprising:
an energy distribution system comprising an electronic monitoring instrument, wherein data is read from the electronic monitoring instrument, the data comprising information regarding a functionality of at least one part of the electronic monitoring instrument; and
a mobile application that analyzes the data to determine if the at least one part is functioning properly by establishing whether or not the at least one part is within a configurable threshold condition, and wherein the mobile application automatically requests at least one replacement part with respect to the at least one part, when the at least one part is found not to be within the threshold condition, wherein the operational functionality of the energy distribution system is enhanced by requesting the at least one replacement part prior to a failure of the at least one part of the electronic monitoring instrument.

10. The system of claim 9 wherein the data is read from the electronic monitoring instrument by a mobile device through bidirectional data communications between the mobile device and the electronic monitoring instrument, wherein the mobile device stores the mobile application in a memory of the mobile device and facilitates processing of the mobile application by a processor.
